Europäisches Patentamt

European Patent Office

Office européen des brevets

(19)

(11) Veröffentlichungsnummer: **0 017 168**
**A2**

(12) **EUROPÄISCHE PATENTANMELDUNG**

(21) Anmeldenummer: **80101623.9**

(22) Anmeldetag: **27.03.80**

(51) Int. Cl.³: **B 63 B 35/32**
**E 02 B 15/04**

(30) Priorität: **31.03.79 DE 2912997**

(43) Veröffentlichungstag der Anmeldung:
**15.10.80 Patentblatt 80/21**

(84) Benannte Vertragsstaaten:
**BE FR GB NL**

(71) Anmelder: **Paul Lindenau GmbH & Co. KG Schiffswerft und Maschinenfabrik**
**Skagerrakufer 10**
**D-2300 Kiel 17(DE)**

(72) Erfinder: **Stoessel, Helmut, Dipl.-Ing.**
**Seeschwalbenweg 23**
**D-2300 Kiel-Schilksee(DE)**

(74) Vertreter: **Hansmann, Dierk**
**Jessenstrasse 4**
**D-2000 Hamburg 50(DE)**

(54) **Zusatzvorrichtung für Schiffe zum Aufnehmen von Öl von einer Wasseroberfläche.**

(57) Bei dieser Ölaufnahmevorrichtung wird an einem Schiff (2) im hinteren Bereich eine senkrecht verlaufende Schiene (4) angeordnet, die über eine Rollenanordnung (5) einen Luftschlauch (1) aufnimmt. Der Luftschlauch (1) bildet mit dem Schiff (2) einen in Fahrtrichtung offenen Aufnahmetrichter (3) und paßt sich durch die Rollenanordnung (5) und die Schiene (4) der Lage des Schiffes sowie den Wellenbewegungen an. Im Bereich des Scheitelpunktes des gebildeten Auffangtrichters (3) wird das gesammelte Öl über eine Absaugvorrichtung (13) aufgenommen.

EP 0 017 168 A2

./...

Croydon Printing Company Ltd.

FIG. 3

Zusatzvorrichtung für Schiffe zum Aufnehmen von Öl

Die Erfindung bezieht sich auf eine Zusatzvorrichtung für Schiffe zum Aufnehmen von Öl von einer Wasseroberfläche, bestehend aus Armen, die an den Längsseiten des Schiffes unter einem Winkel angeordnet sind und ein in Fahrtrichtung offenes Sammelbecken in der Art eines Auffangtrichters bilden, wobei die Arme als aufblasbare Ludtschläuche ausgebildet sind, und aus einer Ölübernahmeeinrichtung in das Schiff.

Die Ausweitung der Tankschiffahrt hat das Risiko von Ölunfällen vergrößert, und gleichzeitig sind eine Vielzahl von Vorrichtungen bekanntgeworden, um eine Bekämpfung der Ölverschmutzung vorzunehmen.

Es ist nach der US-PS 3 783 129 eine Spezialschiff mit ausschwenkbaren Armen bekanntgeworden, mit denen der Ölfilm durch seitliche Öffnungen in der Schiffslängswand ins Schiff geführt wird. Die Reinigung des Wassers erfolgt dann durch ein Verfahren, bei dem Kohle an Polyurethan gelagert ist. Mit einem Förderband wird dieses Material durch Ölfilm gefördert und später wieder aufbereitet. Der Mangel dieser Anordnung besteht darin, daß ein Spezialschiff erforderlich ist und diese Anordnung nur für Spezialzwecke, z.B. beim Aufnehmen von dünnen Ölschichten in ruhigen Gewässern geeignet ist.

In der Zeitschrift "Hansa" 1976, Seite 1967 ist eine Vorrichtung der eingangs genannten Art auf einem Spezialschiff vorgeschlagen worden, wobei zwei V-förmig ausgefahrene Sperren aus aufblasbaren Schläuchen großer Länge von zwei Motorbooten gezogen werden. Das in die Ecke zwischen Sperre und Boot gedrängte Öl tritt dann durch seitliche Klappen in der Wasserlinie in die auf jeder Schiffsseite installierte Einrichtung zum Abschöpfen des Öles vom Wasser ein. Hierbei arbeiten mehrere Schiffe zusammen und durch die erforderlichen Zusatzboote ist eine Funktion unter Seebedingungen kaum praktikabel. Ein weiterer Mangel besteht darin, daß diese Spezialanordnungen als Schiffsverbände nur für diesen vorgegebenen Einsatzfall zu verwenden sind und müssen als Spezialfahrzeuge dafür ständig bereit gehalten werden, so daß dadurch keine wirtschaftliche und damit keine praktikable Lösung zur Abschöpfung von Ölteppichen auf See geschaffen wird.

Die Aufgabe der Erfindung ist es, eine einfache Zusatzvorrichtung der eingangs genannten Art zu schaffen, die eine nachträgliche Ausrüstung von Schiffen ermöglicht und die Abschöpfung von großen Ölflächen im offenen Meer bei Wellengang gewährleistet.

0017168

Zur Lösung dieser Aufgabe ist gemäß der Erfindung vorgesehen, daß die Luftschläuche am Schiff im hinteren Bereich höhenverschieblich über eine senkrecht verlaufende Schiene und eine Rollenanordnung als Verbindungselement zum Luftschlauch angeordnet sind und daß die Ölübernahmeeinrichtung aus einer Absaugvorrichtung besteht, die im Bereich des Scheitelpunktes des durch die Luftschläuche mit dem Schiff gebildeten Auffangtrichters angeordnet ist.

Der Vorteil dieser Anordnung besteht darin, daß kein Spezialschiff erforderlich wird und beispielsweise eine Anordnung dieser Art auf jedem Tanker mitgeführt werden kann. Durch die Ausbildung als aufblasbarer Luftschlauch wird ein Schwimmkörper als Arm geschaffen, der alle Bewegungen des Schiffes und der Dünung mitmacht. Weiterhin sammelt sich im Scheitelpunkt des gebildeten Auffangtrichters der Ölteppich bzw. es schieben sich Ölschichten übereinander, so daß das Absaugen in diesem Bereich sehr effektiv ist und relativ wenig Wasser aufgenommen wird.

Eine vorteilhafte Ausgestaltung der Erfindung besteht darin, daß die Luftschläuche aus Kunststofffolie gebildet sind.

Nach einer weiteren vorteilhaften Ausgestaltung der Erfindung ist vorgesehen, daß die Absaugvorrichtung in der Art eines Saugschnorchels ausgebildet ist.

Zur einfachen Einstellung der Absaugvorrichtung in bezug auf die Wasseroberfläche ist gemäß einer weiteren vorteilhaften Ausgestaltung der Erfindung vorgesehen, daß die Absaugöffnung über zugeordnete flutbare Schwimmkörper höheneinstellbar ist.

Um die Sperrwirkung der Arme zu erhöhen ist gemäß einer anderen vorteilhaften Ausgestaltung der Erfindung vorgesehen, daß der Luftschlauch im Bereich der Wasserlinie zusätzliche Luftausblasöffnungen zur Bildung der Luftsperre aufweist.

In der Zeichnung ist ein Ausführungsbeispiel der Erfindung schematisch dargestellt. Es zeigen:

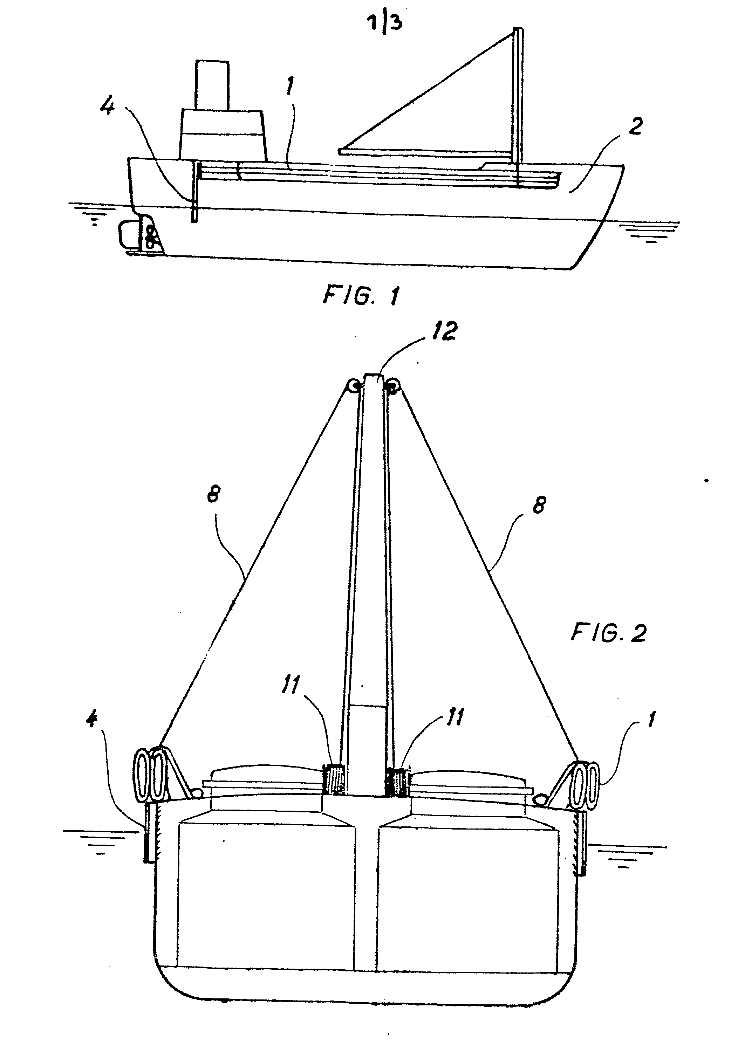

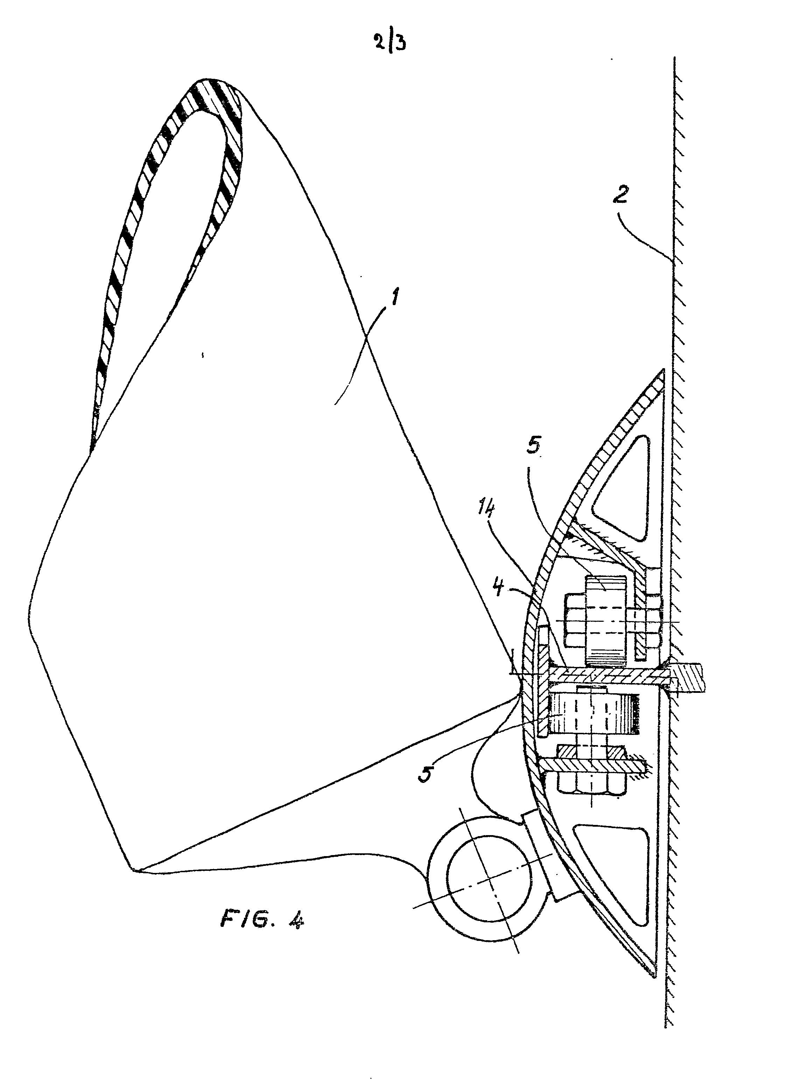

Fig. 1 eine Seitenansicht einer außer Betrieb befindlichen Zusatzvorrichtung zum Aufnehmen von Öl im hochgezogenen Zustand an einem Schiff,

Fig. 2 einen Querschnitt gemäß Fig. 1,

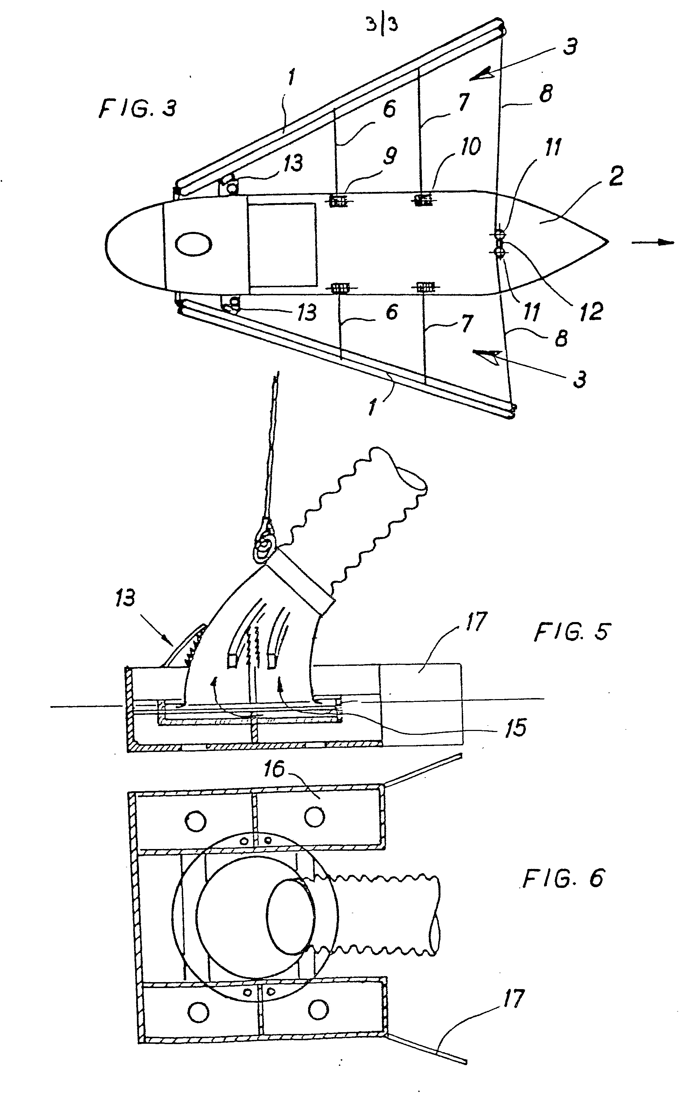

Fig. 3 eine Draufsicht auf eine Zusatzvorrichtung mit gespreizten Luftschläuchen im Betriebszustand auf einem Schiff,

Fig. 4 eine Draufsicht auf eine Anlenkung des Luftschlauches der Zusatzvorrichtung am Schiff im vergrößerten Maßstab und teilweise geschnitten,

Fig. 5 eine Absaugvorrichtung der Zusatzvorrichtung in Seitenansicht und teilweise geschnitten und

Fig. 6 eine Draufsicht auf die Absaugvorrichtung gemäß Fig. 5.

Die dargestellte Zusatzvorrichtung wird im wesentlichen durch einen aufblasbaren Luftschlauch 1 gebildet, wobei beidseitig des Schiffskörpers 2 je ein Luftschlauch 1 angeordnet ist. Der Luftschlauch 1 nimmt gegenüber dem Schiffskörper 2 in der Betriebsphase eine Winkelstellung ein, daß ein Auffangtrichter 3 gebildet wird.

Der Luftschlauch 1 ist mit seinem einen Ende im hinteren Bereich des Schiffskörpers 2 höhenverschieblich befestigt. Die Befestigung ist durch eine senkrecht verlaufende Schiene 4 am Schiffskörper 2 gebildet, die eine Rollenanordnung 5 als Verbindungselement zum Luftschlauch 1 trägt. Hierdurch kann sich der Luftschlauch 1 entsprechend der Wasserlinie selbsttätig einstellen. Die Anlenkung am Schiffskörper 2 ist dabei strömungsgünstig mit einer Verkleidung 14 abgedeckt, so daß zusätzlicher Schiffswiderstand bzw. Spritzwasserbildung bei Freifahrt vermieden wird. Der Luftschlauch 1 wird durch Stahlleinen 6,7 und 8 in der gespreizten Position gehalten und macht alle Bewegungen des Schiffskörpers 2 und der Dünung mit. Die Stahlleinen 6,7 und 8 sind dabei über Winschen 9,10 bzw. 11 am Schiffskörper 2 gehalten. In diesem Fall ist das Stahlseil 8 am äußeren Ende des Luftschlauches 1 über die Mastspitze 12 zur Winsch 11 geführt.

Im Bereich des Scheitelpunktes des Auffangtrichters 3 ist eine Absaugvorrichtung 13 in der Art eines Saugschnorchels angeordnet. Die eigentliche Absaugöffnung 15 ist über Schwimmkörper 16 angeordnet. Die Schwimmkörper 16 sind flutbar, so daß hiermit eine Einstellung der Absaugöffnung 15 zum Abpumpen erfolgt und möglichst wenig Wasser mitgepumpt wird. Der Absaugvorrichtung 13 und den Schwimmkörpern 16 sind dabei Gummischürzen 17 im Einlaufbereich so zugeordnet, daß eine einwandfreie Zuführung gewährleistet ist.

Das abgepumpte Öl und das zwangsweise mitgeführte Wasser wird in einen Laderaum gepumpt. Nach Absetzen des Wassers ist es möglich, dieses Wasser wieder über Bord zu pumpen.

- 6 -

Mit einer derartigen Vorrichtung wird durch langsame
Vorausfahrt des Schiffes das Öl entsprechend über
den Auffangtrichter 3 der Absaugvorrichtung 13 zugeführt und gelangt über die Absaugöffnung 15 in
Absetztanks. Nach Ende des Manövers werden die Luftschläuche 1 am Oberdeck längsseits festgelascht und
die Absaugvorrichtung 13 verstaut.

Patentansprüche

1. Zusatzvorrichtung für Schiffe zum Aufnehmen von Öl von einer Wasseroberfläche, bestehend aus Armen, die an den Längsseiten des Schiffes unter einem Winkel angeordnet sind, und ein in Fahrtrichtung offenes Sammelbecken in der Art eines Auffangtrichters bilden, wobei die Arme als aufblasbare Luftschläuche gebildet sind und aus einer Ölübernahmeeinrichtung in das Schiff, dadurch gekennzeichnet, daß die Luftschläuche (1) am Schiff (2) im hinteren Bereich höhenverschieblich über eine senkrecht verlaufende Schiene (4) und eine Rollenanordnung (5) als Verbindungselement zum Luftschlauch (1) angeordnet sind und daß die Ölübernahmevorrichtung aus einer Absaugvorrichtung (13) besteht, die im Bereich des Scheitelpunktes des durch die Luftschläuche (1) mit dem Schiff gebildeten Auffangtrichters angeordnet ist.

2. Zusatzvorrichtung nach Anspruch 1, dadurch gekennzeichnet, daß die Luftschläuche (1) aus Kunststofffolie gebildet sind.

3. Zusatzvorrichtung nach Anspruch 1 oder 2, dadurch gekennzeichnet, daß die Absaugvorrichtung (13) in der Art eines Saugschnorchels ausgebildet ist.

4. Zusatzvorrichtung nach einem der Ansprüche 1 bis 3, dadurch gekennzeichnet, daß die Absaugöffnung (15) der Absaugvorrichtung (13) über zugeordnete flutbare Schwimmkörper (16) höheneinstellbar ist.

0017168

5. Zusatzvorrichtung nach einem der Ansprüche 1 bis 4, dadurch gekennzeichnet, daß der Luftschlauch (1) im Bereich der Wasserlinie zusätzliche Luftausblaseöffnungen zur Bildung einer Luftsperre aufweist.

1|3

FIG. 1

FIG. 2

0017168

0017168

FIG. 4

0017168

FIG. 3

FIG. 5

FIG. 6